(19) Europäisches Patentamt
European Patent Office
Office européen des brevets

(11) Numéro de publication: **0 179 707**
**B1**

# (12) FASCICULE DE BREVET EUROPÉEN

(45) Date de publication du fascicule du brevet: **13.01.88**

(21) Numéro de dépôt: **85401955.1**

(22) Date de dépôt: **08.10.85**

(51) Int. Cl.⁴: **C 07 C 149/43**, C 07 D 339/00, C 07 D 341/00, C 08 K 5/37, C 08 L 21/00

## (54) Compositions notamment dans le but d'améliorer les propriétés des vulcanisats et le renforcement des caoutchoucs naturels et synthétiques.

(30) Priorité: **12.10.84 FR 8415654**

(43) Date de publication de la demande: **30.04.86 Bulletin 86/18**

(45) Mention de la délivrance du brevet: **13.01.88 Bulletin 88/2**

(84) Etats contractants désignés: **AT BE DE FR GB IT LU NL SE**

(56) Documents cité:
**US-A-3 464 969**
**US-A-3 994 742**
**US-A-4 096 085**
**US-A-4 332 967**

(73) Titulaire: **RHONE- POULENC CHIMIE, 25, quai Paul Doumer, F-92408 Courbevoie Cédex (FR)**

(72) Inventeur: **Le Ludec, Joel, 11, rue de Boyer, F-69005 Lyon (FR)**
Inventeur: **Machurat, Jean, Résidence les Sablons Rue Descartes, F-69250 Neuville/s/Saône (FR)**
Inventeur: **Morawski, Jean- Claude, 10, rue des Primevères, F-69680 Chassieu (FR)**
Inventeur: **Soula, Gérard, 33, rue Nungesser, F-69330 Meyzieu (FR)**

(74) Mandataire: **Dubruc, Philippe, RHONE- POULENC INTERSERVICES Service Brevets Chimie 25, quai Paul- Doumer, F-92408 Courbevoie Cédex (FR)**

**EP 0 179 707 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention a pour objet de nouvelles compositions notamment dans le but d'améliorer les propriétés des vulcanisats.

Elle concerne également un procédé pour les obtenir. Enfin, elle a trait à l'application desdites compositions notamment au renforcement des caoutchoucs naturels et synthétiques.

On a recherché depuis longtemps des additifs pour améliorer les propriétés des élastomères renforcés au moyen de charges minérales et en particulier celles des compositions silice-caoutchouc.

On a remarqué que l'emploi de composés contenant des groupes amines dans les compositions silice-caoutchouc vulcanisées au soufre permet d'améliorer la préparation ainsi que les propriétés des vulcanisats, voir par exemple US 2,692,871, US 2,692,870, FR 1 436 625 et US 3,399,166.

Dans l'US 3,499,865, une réaction préliminaire du soufre avec les amines organiques est effectuée en présence d'une partie de la charge utilisée dans le mélange caoutchouc (préparation d'un mélange-maître).

Dans l'US 3,994,742, il est mis en oeuvre des composés contenant à la fois des groupes amines et des groupes soufres. Ces composés sont définis comme étant des agents de couplage, au même titre que les dérivés bien connus de la famille des mercapto-silanes dont un représentant, le $\gamma$ -mercaptopropyl triméthoxysilane, est reconnu comme l'un des plus efficaces dans ce domaine d'application (FR 2 094 859).

Dans l'US 4,151,157 et l'US 4,156,677, on décrit des composés réunissant dans la même structure les trois groupes amine, soufre et trialkoxysilane.

On voit ainsi que de nombreuses recherches ont été effectuées dans ce domaine, mais que les solutions proposées ne donnent pas entière satisfaction, soit pour des raisons économiques parce que les additifs sont encore trop chers par rapport à la charge proprement dite, ce qui est le cas avec les mercapto-silanes, soit pour des raisons pratiques parce que les additifs ne sont pas assez efficaces ou difficiles à préparer.

En réalité, le problème est fort complexe. En effet, il convient d'une part, de faciliter le travail de mélangeage en vue de la vulcanisation, ce que l'on appelle communément aide au procédé (aid-processing) et, d'autre part, d'améliorer les propriétés du vulcanisat. Il faut donc tenir compte, lors du processus de vulcanisation non seulement de la compatibilité et notamment de la solubilité du composé introduit dans la matrice élastomérique, mais aussi de son comportement vis-à-vis de la charge. Ce comportement doit donc être appréhendé et du point de vue chimique et de celui de la structure ou morphologie de la charge.

Par ailleurs, il est nécessaire d'obtenir une composition de produits qui soit suffisamment stable à température inférieure à celle de vulcanisation et susceptible d'être active dans les conditions et le milieu de vulcanisation.

Ceci permet de comprendre que certaines compositions qui portent des fonctions soufrées et azotées ne soient pas efficaces et que l'on ait pu préférer amener, séparément, d'une part la fonction azotée et, d'autre part, la fonction soufrée.

Ceci explique qu'en dépit d'efforts considérables accomplis depuis plusieurs décennies et du grand nombre d'additifs proposés notamment ceux de la famille des silanes, on recherche encore de meilleures solutions à ce problème.

La demanderesse a ainsi été amenée à choisir une voie différente, en rupture de démarche avec la voie traditionnelle, en faisant appel à ce qu'elle a appelé les agents d'interface.

Sous ce terme, elle a désigné un additif contenant

1) au moins une partie de molécule qui présente plus d'affinité pour la silice que pour les autres ingrédients du mélange caoutchouc

2) un groupe alkyle compatible avec l'élastomère.

L'effet de cet additif est de réduire la cohésion du réseau de silice.

La demanderesse a d'abord revendiqué des compositions d'additifs à base d'alcényl succinimides, obtenus par condensation d'une polyamine sur un anhydride alcényl succinique dont le radical alcényle contient de 3 à 100, de préférence de 3 à 80 atomes de carbone dans l'EP 32 076.

Elle s'est aperçu que ces produits présentaient de plus un effet de synergie remarquable avec les silanes traditionnels (EP 34 970).

Parmi les agents d'interface, les dérivés de la tétra-éthylène pentamine (TEPA) en particulier se sont montrés efficaces. En outre, ces dérivés sont peu coûteux, en raison d'une part de la facilité de leur préparation et, d'autre part, de l'accessibilité des matières premières, la TEPA commerciale employée étant en réalité un mélange de polyamines contenant des proportions variables de TEPA pure.

La TEPA est connue comme agent de vulcanisation, activateur du soufre. La demanderesse a observé que malheureusement, la TEPA présente une grande réactivité vis-à-vis des groupes soufrés, ce qui peut conduire à une perte du soufre sous forme de sulfure d'hydrogène $SH_2$.

La demanderesse, après de longs travaux, a trouvé que le préjugé défavorable vis-à-vis de la TEPA pouvait être surmonté et que les inconvénients de l'art antérieur pouvaient être éliminés grâce à des compositions obtenues en faisant réagir au moins un composé présentant au moins un groupement soufré avec des compositions à base de tétra-éthylène pentamine.

Par la suite, on désignera les compositions à base de tétra -éthylène pentamine simplement par TEPA.

Dans la pratique, lesdites compositions correspondent à des produits commerciaux renfermant, outre la tétra-éthylène pentamine proprement dite, d'autres dérivés susceptibles eux-mêmes de réagir lors de la fabrication du produit selon l'invention.

En effet, la demanderesse s'est aperçu que les conditions réactionnelles étaient très importantes et que d'une manière générale, les conditions devaient être modérées en température, de manière à éviter la destruction prématurée des groupements soufrés et l'apparition de réactions parasites.

Ces conditions modérées peuvent être réalisées de plusieurs manières pour obtenir les compositions selon l'invention..

Comme porteur (ou substrat) du groupement soufré, on peut par exemple, faire appel à un ester qui permet de conduire la réaction avec la TEPA, avantageusement à des températures ne dépassant pas 110°C, plus généralement entre 30°C et 100°C. Cette façon d'opérer, outre la non-destruction du groupe soufré, offre l'avantage de limiter la transformation ultérieure des dérivés à liaison amide formés en dérivés à cycle imidazoline, d'où de conduire à une meilleure sélectivité en produits recherchés, selon le schéma

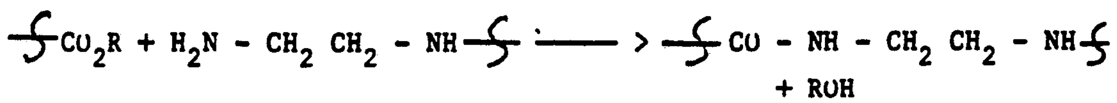


en évitant la formation de produits

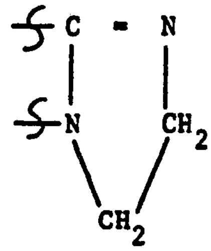

R représente un radical alkyle; il est choisi de façon que l'alcool formé ROH soit facile à éliminer du milieu si on le désire, de préférence R = - $CH_3$ ou - $C_2H_5$.

Selon un autre mode de réalisation, on peut utiliser un acide comme porteur du groupe soufré avantageusement en présence d'un agent de condensation efficace. Un tel agent de condensation peut être par exemple le dicyclohexyl carbodiimide (DCCI) qui permet de conduire la réaction entre la TEPA et les acides porteurs du groupe soufré, avantageusement dans l'intervalle de température 0-25°C, avec une excellente sélectivité en dérivés à liaison amide selon le schéma

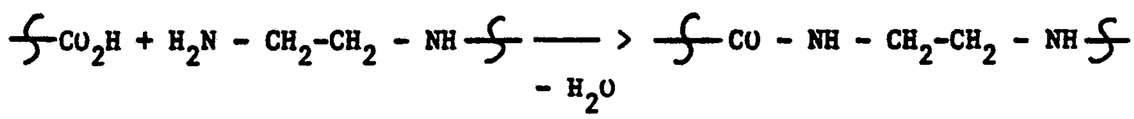


On peut aussi utiliser comme porteur du groupe soufré un isothiocyanate d'alkyle ou d'aryle qui réagit avec la TEPA, à température ambiante ou par chauffage vers 40-60°C.

Ainsi, d'une manière générale, l'apport soufre sur la TEPA est réalisé dans des conditions douces en une étape, par condensation ou addition de la composition renfermant la TEPA avec un porteur (ou substrat) d'au moins un groupe soufré.

Il appartient à l'homme de métier, en fonction du produit qu'il veut obtenir, de jouer sur la nature du porteur, plus précisément sur la nature et le nombre de fonctions réactives vis-à-vis des fonctions amines de la TEPA, sur la nature et le nombre de groupes soufrés et également sur la nature et la longueur de l'espaceur reliant les deux types de fonctions du porteur, toutes possibilités que ne permettait jusqu'ici aucune autre technique.

Ce porteur (ou substrat) peut être un acide (mono ou difonctionnel) ou ses dérivés tels que anhydrides et ester (mono ou difonctionnel), un isothiocyanate, ou encore un aldéhyde, une cétone, un époxyde.

Le porteur peut en particulier présenter:

- au moins un groupe mercaptan - SH
- au moins un groupe polysulfure - S - x $\geqslant$ 2

Mais on ne sortirait pas du cadre de la présente invention en faisant appel à au moins un groupe isothiocyanate - NCS.

Pour obtenir les dérivés de la TEPA à groupe - SH, on peut, par exemple, mettre en oeuvre un procédé qui comprend les étapes suivantes:

1) on fait réagir le mercapto-ester de formule $HS(CH_2)_n\ CO_2\ CH_3$ de préférence avec n = 1 à 10, avec la TEPA avantageusement vers 30-90°C, en présence d'un diluant ou non, ce diluant étant de préférence un hydrocarbure aromatique tel que le xylène ou le toluène.

La composition à base de TEPA étant en pratique assimilée à la TEPA pure de masse 189, le rapport molaire mercapto-ester/ TEPA est d'au moins 1, au maximum 5 suivant la pureté du produit commercial, de préférence de 1 à 3.

2) On élimine l'alcool formé selon les techniques classiques en veillant à maintenir les températures ci-

dessus, mais on peut tout aussi bien laisser l'alcool dans le milieu, pour cause de simplification du procédé.

Le mercapto-ester peut être obtenu par exemple de la manière suivante:

- on prépare un mercapto-acide d'une manière connue (addition de l'acide thio-acétique sur un acide mono-insaturé puis saponification, selon J. Org. Chem. 23, 1525, 1958)

- on estérifie le mercapto-acide au moyen d'un alcool, tel que le méthanol. On accède ainsi à un ester aliphatique de formule

- $HS\ (CH_2)_n\ CO_2\ CH_3 n = 3$ à 10

D'une manière particulière, on peut également partir d'un diester, tel que le mercapto-2 succinate de méthyle.

Si l'on désire condenser directement avec la TEPA, le mercaptoacide préparé précédemment, on fait appel cette fois à un agent de condensation tel que le dicyclohexyl carbodiimide (DCCI) et la réaction est effectuée de préférence à 0-25°C, en milieu tel que le chlorure de méthylène, solvant de la composition de produits soufrés formés, mais non solvant du produit de transformation de l'agent de condensation tel que la dicyclohexylurée. Le DCCI étant transformé en dicyclohexylurée insoluble dans le milieu, il suffit de filtrer pour récupérer la composition de produits soufrés précédemment formés.

Selon un autre mode de réalisation, on effectue les opérations suivantes:

1) on met à réagir du soufre avec un ester mono-insaturé pour obtenir un ester sulfurisé. Le rapport S/ester est supérieur ou égal à 2 et inférieur ou égal à 6 selon la quantité de soufre engagée (2 à 6 at/g de soufre par mole d'ester) et les conditions réactionnelles (température 140°C - 160°C, durée 3 h - 16 h)

2) on fait réagir l'ester sulfurisé avec la TEPA en chauffant à 30-90°C, au sein d'un solvant ou non, le solvant étant de préférence du xylène ou du toluène.

Le rapport molaire ester sulfurisé/TEPA est d'au moins 1, au maximum 5 selon la pureté de la TEPA.

3) On élimine l'alcool formé de manière habituelle ou bien on le laisse dans le milieu.

La réaction de l'étape 1 peut être réalisée en milieu hydrocarbure benzénique si nécessaire, tel que le xylène ou le toluène et éventuellement sous pression autogène dans un tube fermé si l'ester a un point d'ébullition inférieur à 140°C.

Comme esters mis à sulfuriser, on peut citer des mono-esters tels que l'oléate de méthyle, l'undécylénate de méthyle, ou des di-esters tels que le tétrapropényl succinate de méthyle, le tétrahydrophtalate de méthyle, le maléate de méthyle et l'itaconate de méthyle.

On obtient ainsi des dérivés à fonctions polysulfures qui s'avèrent particulièrement efficaces.

Bien entendu, ces modes particuliers qu'il est possible de combiner ne sont pas limitatifs de l'invention, mais au contraire montrent que le concept même de l'invention est de portée générale.

Bien évidemment, les produits susceptibles d'être obtenus par le procédé de l'invention font partie de l'invention.

De tels produits peuvent être utilisés seuls ou en combinaison. On peut les mélanger entre eux ou les utiliser avec d'autres additifs d'interfaces et/ou couplants.

Mais, comme dit précédemment, ces compositions doivent être efficaces dans le milieu dans lequel elles vont subir un traitement thermique.

Les groupements soufrés doivent notamment être suffisamment stables pour pouvoir être préparés et conservés, mais pas trop stables pour être actifs dans le domaine de températures de la vulcanisation, dans le cas de vulcanisats. De plus, leur activité ne doit pas être détruite chimiquement dans ce domaine de températures par d'autres constituants du milieu considéré.

Les compositions selon l'invention sont applicables d'une manière générale aux cas requérant une bonne dispersion et un bon couplage dans une matrice de polymères.

Elle s'applique plus particulièrement aux compositions élastomeriques renfermant pour 100 parties en poids de caoutchouc naturel ou synthétique, de 0,1 à 4 parties d'acide stéarique, de 0,1 à 5,0 parties en poids d'un agent de réticulation (soufre essentiellement), de 0,2 à 6 parties d'accélérateurs, de 0,0 à 6,0 parties d'antioxydant, de 0 à 50 parties de plastifiant, de 0,1 à 10 parties d'oxyde de zinc, de 10 à 60 parties en poids de charge et de 0,1 à 5 parties en poids d'une composition selon l'invention.

Avantageusement, de telles compositions élastomériques sont vulcanisées à une température comprise entre 100 et 200°C pour un caoutchouc de type SBR ou naturel.

Dans le cas du renforcement de mélanges pour pneumatiques, les charges minérales renforçantes sont en particulier des silices obtenues par précipitation de surface spécifique CTAB avantageusement comprise entre 100 et 300 $m^2/g$.

On peut notamment utiliser des silices dites à grandes surfaces, c'est-à-dire de surface CTAB supérieure à 180 $m^2/g$.

Ces silices peuvent être mises en oeuvre simultanément ou non avec du noir de carbone.

Eventuellement, la charge peut servir de support au produit selon l'invention.

Mais la présente invention sera plus aisément comprise à l'aide des exemples suivants, donnés à titre illustratif mais nullement limitatif.

Les produits mis en oeuvre dans les exemples sont les suivants:

- silane: gamma-mercaptopropyl-triméthoxysilane, commercialisé par Union Carbide sous la dénomination A-189

**Produit 1**

Dans un ballon de 1 litre équipé d'une agitation centrale, d'un thermomètre, d'une ampoule à brome, d'une colonne vigreux surmontée d'une tête de distillation suivie d'un condenseur et d'un récepteur, on introduit 66,6 g de TEPA (soit 0,35 mole) et 100 ml de toluène (l'appareillage est placé sous atmosphère d'azote).

On coule alors, en agitant, 55 g de β -mercapto-propionate de méthyle (0,46 mole) en 10 minutes.

Le mélange est porté à 50°C et cette température est maintenue environ 5 h jusqu'à ce qu'il ne se forme plus de méthanol (dosage par chromatographie en phase gazeuse).

L'appareillage est alors placé sous une pression de 33 à 39 $10^2$ Pa pour eliminer le toluène et le méthanol.

Le produit obtenu est un liquide brun, visqueux à froid, contenant 11,3 % de soufre.

Par analyse infra-rouge, on note la présence de bandes caractéristiques de la liaison amide.

**Produit 2**

Dans le même appareillage que lors de la préparation du produit (1), on introduit 62,4 g de TEPA (même produit que précédemment) (soit 0,33 mole) et 60 ml de toluène.

On coule alors en agitant 79,2 g de β -mercapto-propionate de méthyle (0,66 mole) en 10 minutes.

Le mélange est porté à 50°C et cette température est maintenue jusqu'à ce qu'il ne se forme plus de méthanol (6 heures).

Le traitement est identique à celui du produit (1).

On obtient un produit visqueux brun contenant 13,6 % de soufre.

L'analyse infra-rouge confirme la présence de bandes caractéristiques de la liaison amide.

**Produit 3**

Dans le même appareillage que précédemment, on introduit 77,2 g d'undécylénate de méthyle (0,39 mole), 50 ml de xyléne, 25 g de soufre (0,78 at/g) et chauffe à 160°C pendant 3 h 30, jusqu'à ce que le soufre ait complètement réagi.

On refroidit le mélange vers 80°C et coule alors 56,7 g de TEPA (0,3 mole) en 15 minutes. On maintient le chauffage sous agitation jusqu'à ce qu'il ne se forme plus de méthanol (environ 6 h).

L'appareillage est alors placé sous léger vide (33 $10^2$ Pa) pour chasser le xylène et le méthanol.

La composition de produits obtenue est un liquide visqueux, contenant 13,5 % de soufre.

L'analyse infra-rouge confirme la présence de liaisons amides.

**Produit 4**

Dans le même appareillage que précédemment, on introduit 150 g de TEPA (0,79 mole), puis 221 g de mercapto-11 undécanoate de méthyle (0,95 mole) en 5 minutes.

L'appareillage est placé sous 6,6 $10^2$ Pa et le récepteur est plongé dans de l'air liquide.

Tout en agitant, le mélange est porté progressivement à 80°C et est maintenu dans ces conditions jusqu'à la fin de formation du méthanol (volume recueilli dans le récepteur: 38 ml, soit 98 % de la théorie).

Le mélange réactionnel brun restant dans le ballon se solidifie à température ordinaire. La teneur en soufre est de 8,1 %, son spectre infra-rouge contient des bandes de type amide.

**Produit 5**

Dans un ballon de 1 litre muni d'une agitation centrale, d'un thermomètre, d'une ampoule à brome et d'un réfrigérant, on introduit 68,9 g d'acide β -mercapto-propionique (0,65 mole) et 80 ml de chlorure de méthylène. La solution obtenue est refroidie à 0°C dans un bain de carboglace et on coule 133,9 g de dicyclohexyl carbodiimide (0,65 mole) dissout dans 100 ml de chlorure de méthylène en 30 minutes, en maintenant la température de 0°C, puis 61,4 g de TEPA (0,32 mole) dans 90 ml de chlorure de méthylène en 1 h. L'agitation est poursuivie pendant 3 h et le milieu qui est devenu hétérogène est filtré.

On obtient:

- un solide blanc (N, N'-dicyclohexylurée) qui est lavé au chlorure de méthylène froid et séché (poids 139,6 g, soit 96 % de la théorie, point de fusion 232°C)

- un filtrat jaune, auquel on joint le solvant du lavage précédent. Après élimination de tout le chlorure de méthylène à l'évaporateur rotatif, on obtient 126 g de produit brun-clair, visqueux à froid, contenant 16 % de

soufre. L'analyse infra-rouge confirme la présence de liaisons amides.

La silice mise en oeuvre dans les exemples présente les caractéristiques suivantes:

| | | | |
|---|---|---|---|
| - Silice: | perte au feu | | < 12,5 % |
| | pH (5 g/100 cc) | | 6 - 7,5 |
| | surface BET ($m^2/g$) | ≠ | 175 |
| | surface CTAB ($m^2/g$) | ≠ | 175 |

La surface CTAB (surface externe), par adsorption de bromure de céthyl triméthyl ammonium à pH égal 9, est déterminée selon la methode exposée par JAY, JANSEN et C. KRAUS dans Rubber Chemistry and Technology 44 (1974) pages 1287-1296.

La mise en oeuvre a été réalisée de la manière suivante.

**1ERE PHASE**

Le mélange est préparé selon la procédure habituelle pour ce type de préparation. Tous les ingrédients (à l'exception du soufre et des accélérateurs) sont mélangés à l'aide d'un malaxeur interne type BANBURY BR à une température de l'ordre de 110/120° C.

**2EME PHASE**

Le soufre et les accélérateurs sont ajoutés sous forme de mélange maître à l'aide d'un malaxeur à cylindres (température 50/100° C).

Les tests suivants ont été faits:

**TESTS MECANIQUES, STATIQUES ET DYNAMIQUES**

1. - **Rhéomètre MONSANTO** (ASTM D 2084)
Mesure les propriétés rhéologiques du mélange durant la vulcanisation.
- couple minimal (Cm): consistance du mélange non vulcanisé (mélange "cru") à la température de l'essai
- couple maximal (CM): consistance du mélange après réticulation
- Δ couple: CM - Cm est en relation avec le taux de réticulation
- précocité: temps nécessaire pour démarrer la réticulation à la température de l'essai
- indice: en relation avec la vitesse de vulcanisation (temps optimum - précocité)
- temps optimum: $X = \frac{(CM - Cm \times 90}{100} + Cm$

Couple X → Y minutes = Temps optimum
(ordonnée) (abscisse)

Ces méthodes sont en particulier décrites dans l'Encyclopedia of Polymer Science and Technology volume 12 page 265 (Interscience Publishers - John WILEY® Sons, Inc.)

2. - **Propriétés statiques**
Sont celles qui sont mesurées selon les normes:
a) - **ASTM D 412-51 T**
Résistance rupture Mpa
Allongement %
Module Mpa
b) - **ASTM D 2240-75**
Dureté Shore A
c) - **NP T 47 - 126**
Déchirement pantalon kN/m
d) - **DIN 53516**
Abrasion (résistance à 1')
e) - **ASTM D 1054-55**
Rebond

3. - **Propriétés dynamiques**
**ASTM D 623-67**
Flexomètre Goodrich
Cet appareil permet de soumettre un vulcanisat à des déformations dynamiques provoquées par une

compression statique à laquelle on superpose une compression dynamique.

a) compression statique (CS %): déflextion sous charge constante

b) déformation permanente (DP %): % de déformation résiduaire après essai

c) compression dynamique (CD %): % de déformation à l'équilibre durant l'essai.

CDO: compression dynamique en début d'essai

CDF: compression dynamique en fin d'essai

Δ CD = CDF - CDO évolution de la compression dynamique qui est en relation avec la tenue à la fatigue

d) Δ T.base: Δ T. entre la température à la surface de l'éprouvette (à sa base) et la température de la chambre

e) Δ T.coeur: Δ T. entre la température au coeur de l'éprouvette et la température de la chambre

f) conditions des essais: charge 106,7 N (24 lbs), déflexion 22,2 %, fréquence 21,4 Hz, température de la chambre = 50°C

**EXEMPLE 1**

On réalise une première série d'essais avec une composition à base de caoutchouc synthétique (SBR) en mettant en oeuvre la formule suivante, comprenant en parties en poids:

| | |
|---|---|
| - copolymère butadiène styrène (SBR 1509) | 100 |
| - silice | 50 |
| - polyéthylène glycol (PEG 4000) | 3,0 |
| - acide stéarique | 3,0 |
| - ZnO actif | 3,00 |
| - accélérateur MBTS | 0,75 |
| - accélérateur DOTG | 1,50 |
| - anti-oxygène: diphényl amine octylée (Permanax OD) | 2,00 |
| - soufre | 2,25 |
| - additif selon tableau | |

**TABLEAU N° 1**

| REFERENCE MELANGE | 1 | 2 | 3 | 4 | 5 | 6 | 7 |
|---|---|---|---|---|---|---|---|
| REFERENCE PRODUIT | - | Silane A. 189 | 1 | 2 | 3 | 4 | 5 |
| % SUR SILICE | - | 3 % | 4,25 % | 5,6 % | 6,4 % | 5,95 % | 5,6 % |

**TABLEAU N° 2**

| | CM | Cm | ΔC | t.90 | t+2 | INDICE |
|---|---|---|---|---|---|---|
| 1 | 79 | 12 | 67 | 11mins30s | 4min30s | 7min00s |
| 2 | 86,5 | 20 | 66,5 | 8min30s | 1min10s | 7min20s |
| 3 | 85 | 18 | 67 | 8min45s | 1min30s | 7min15 |
| 4 | 85 | 22 | 63 | 12min00s | 1min05s | 10min55s |
| 5 | 91 | 20 | 71 | 9min15s | 1min30s | 7min45s |
| 6 | 86 | 25 | 61 | 11min15s | 1min15s | 10min00s |
| 7 | 86 | 17 | 69 | 9min00s | 1min15s | 7min45 |

**TABLEAU N° 3**

| ShA | Mod.50 % MPa | Mod.100 % MPa | Mod.300 % MPa | R/r MPa | All.Rupt. % | Dech. Pant. KN/m | Abras. Din | Rebond |
|---|---|---|---|---|---|---|---|---|
| 66 | 1,18 | 1,50 | 3,44 | 16,0 | 645 | 17 | 156 | 32 |
| 67 | 1,55 | 2,43 | 8,33 | 20,8 | 538 | 43 | 101 | 37 |
| 65 | 1,27 | 1,82 | 4,66 | 16,8 | 637 | 17 | 139 | 39 |
| 67 | 1,37 | 2,05 | 5,62 | 17,2 | 580 | 29 | 121 | 38 |
| 70 | 1,58 | 2,29 | 6,23 | 17,4 | 492 | 27 | 125 | 39 |
| 67 | 1,45 | 2,11 | 5,69 | 17,7 | 615 | 33 | 123 | 42 |
| 67 | 1,43 | 2,03 | 5,16 | 16,9 | 596 | 20 | 140 | 37 |

**TABLEAU N° 4**

| CS % | CDO % | CDF % | Δ CD % | ΔT. base °C | Δ.coeur °C | DP % |
|---|---|---|---|---|---|---|
| 14,3 | 6,0 | 12,2 | + 6,2 | 35,5 | 112 | 6,0 |
| 11,6 | 2,1 | 3,9 | + 1,8 | 26,5 | 85,5 | 2,2 |
| 15,2 | 5,3 | 8,9 | + 3,6 | 30 | 101 | 3,9 |
| 13,8 | 4,5 | 9,3 | + 4,8 | 33 | 116 | 4,5 |
| 12,4 | 2,7 | 6,3 | + 3,6 | 28 | 98 | 3,4 |
| 12,0 | 2,5 | 8,3 | + 5,8 | 31 | 110 | 4,2 |
| 13,0 | 3,6 | 9,0 | + 5,4 | 34 | 122 | 5,2 |

**TABLEAU N° 5**
**RECAPITULATIF DES PRINCIPALES CARACTERISTIQUES**

| CARACTERISTIQUES FORMULE | DURETE Sh A | REBOND % | MOD 50% MPa | MOD 300 % MPa | DECH.PANT. KN/m | ABR DIN $mm^3$ | Δ C °C |
|---|---|---|---|---|---|---|---|
| $HS-(CH_2)_3Si(OCH_3)_3$ | 66 | 32 | 1,18 | 3,44 | 17 | 156 | 112 |
| $HS-(CH_2)_2-CO-$ TEPA (1) | 65 | 39 | 1,27 | 4,66 | 17 | 139 | 101 |
| $HS-(CH_2)_2-CO$<br>$HS-(CH_2)_2-CO$ > TEPA (2) | 67 | 38 | 1,37 | 5,62 | 29 | 121 | 116 |
| 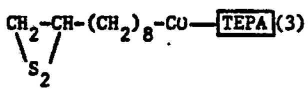 (3) | 70 | 39 | 1,58 | 6,23 | 27 | 125 | 98 |
| $HS-(CH_2)_{10}-CO-$ TEPA (4) | 67 | 42 | 1,45 | 5,69 | 33 | 123 | 110 |
| $HS-(CH_2)_2-CO$<br>$HS-(CH_2)_2-CO$ > TEPA (5) | 67 | 37 | 1,43 | 5,16 | 20 | 140 | 122 |

## ANALYSE DES RESULTATS

Les mélanges 1 (SBR-Silice) et 2 (SBR-Silice-Silane) sont les deux mélanges témoins qui permettent de juger l'efficacité des différents produits testés.

Cette comparaison met en évidence les gains qu'il est possible d'obtenir, en présence de Silane, pour l'ensemble des propriétés statiques et dynamiques des vulcanisats renforcés avec de la silice.

Schématiquement, on peut dire qu'un mélange élastomère-silice 175 m]-Silane a un niveau global de performances équivalent à un mélange élastomère-Noir de carbone N.300.

## PRODUITS 1 - 2 - 4 ET 5

**Résistance à l'abrasion** (tableau 5)

En prenant l'ensemble des mélanges, on observe que la corrélation, (bien connue pour les Noirs de Carbone) module 300 - résistance à l'abrasion, est respectée.

On observe également:
- que le produit 4 (une fonction SH et 10 $CH_2$) est supérieur au produit 1 (une fonction SH et 2 $CH_2$)
- que le produit 2 (2 fonctions SH et 2 $CH_2$) est supérieur au produit 1 (une fonction SH et 2 $CH_2$)
- que le produit 2 (mode opératoire différent) est supérieur au produit 5.

**Echauffement** (Δ T.C)

On note que, de plus, le produit 1 permet d'améliorer notablement l'échauffement (11°C) conjointement à la résistance à l'abrasion (10 %).

**Déchirement**

Deux produits entraînent des améliorations substantielles (P 2 et P 4).

Cette amélioration est réelle, compte tenu qu'elle est parallèle à une augmentation du module et du rebond.

**Rebond** (élasticité)

Se situe pour tous les produits au même niveau (P 1 - P 5 - P 2) ou à un niveau très supérieur à celui du Silane (P 4).

L'augmentation du rebond (P 4) est d'autant plus significative qu'elle ne s'accompagne pas d'une diminution de la dureté.

**PRODUIT 3**

Toutes les caractéristiques statiques et dynamiques sont améliorées.

Les gains, exprimés en %, le sont par rapport aux témoins, c'est-à-dire aux Δ des témoins.

| | |
|---|---|
| Echauffement | Gain..50 % |
| Résistance à l'abrasion | Gain..50 % |
| Déchirement | Gain..40 % |
| Module 50 % | Gain..100 % |
| Module 300 % | Gain..60 % |
| Dureté | Supérieur au témoin Silane |
| Rebond | Supérieur au témoin Silane |

On remarque que le produit selon l'invention a un comportement spécifique. Si on le compare au témoin, on note une amélioration des propriétés plus ou moins importante et plus ou moins globale, mais toujours significative. Si on le compare à un silane (ou à une composition silane-succinimide), on peut même avoir un comportement supérieur au silane dans le cas de la dureté et du rebond pour le produit 3. Ceci est d'autant plus remarquable que ce produit est très efficace sur l'amélioration du reste des propriétés.

**EXEMPLE 2**

On fait une seconde série d'essais en utilisant une formule à base de caoutchouc naturel, constituée en parties en poids de:

| | |
|---|---|
| - caoutchouc naturel SMR 5L | 100,00 |
| - acide stéarique | 1,50 |
| - oxyde de zinc | 4,50 |
| - N-isopropyl-N-phényl-N'-phényl-p-phénylène diamine (antioxygène PERMANAX IPPD) | 1,50 |
| - N-diméthyl 1-3 butyl N'-phényl-p-phénylène diamine (antioxygène PERMANAX 6PPI) | 1,50 |
| - accélérateur VULCAFOR CBS N-cyclohéxyl-2-Benzothiozyl sulfénamide | 4,00 |
| - soufre | 1,50 |
| - silice | 50 |
| - additif (selon tableau) | |

**TABLEAU N° 6**

| REFERENCES MELANGES | 8 | 9 | 10 | 11 | 12 |
|---|---|---|---|---|---|
| REFERENCES PRODUITS | - | SILANE A. 189 | 5 | 3 | 4 |
| % SUR SILICE | - | 3,0 | 5,6 | 6,4 (*) | 5,95 |

(*) - Mélange "grillé" et refait avec 3,2 %

**BANBURY**

**1ère phase**

NR + Charge + Antioxygène + Acide Stéarique + Agent de Couplage + ZnO: fin malaxage 150° C.

**2éme phase**

Reprise après 24 heures et addition de l'accélérateur CBS: fin du malaxage 120° C.

**MALAXEUR OUVERT**

Reprise du mélange après 24 heures
Addition du soufre
Passage au fin (4 fois)
Tirage en feuille (2 mm)
Les résultats sont rassemblés dans les tableaux ci-après.

**TABLEAU N° 7**

| CM | Cm | Δ C. | T.90 | T+2 | INDICE | REV. |
|---|---|---|---|---|---|---|
| 92,5 | 26 | 66,5 | 6min45s | 3min30s | 3min15s | - 10 |
| 93,5 | 22 | 71,5 | 7min45s | 4min20s | 3min25s | - 4,5 |
| 94 | 22,5 | 71,5 | 5min15s | 2min30s | 2min | 45s- 3 |
| 83 | ,524 | | 59,5 | 6min00s | 3min00s | 3min00s15 |
| 88 | ,516 | | 72,t | 5min20s | 2min30s | 2min50s0 |

**TABLEAU N° 8**

| Δ ShA | Mod. 50 % MPa | Mod. 100 % MPa | Mod. 300 % MPa | R/r MPa | All.rupt. % | Déch.Pant. KN/m | Abras. Din | Rebond |
|---|---|---|---|---|---|---|---|---|
| 67 | 1,38 | 2,14 | 9,33 | 29,4 | 623 | 74 | 168 | 37 |
| 72 | 1,94 | 3,62 | 15,9 | 32,5 | 538 | 73 | 121 | 39 |
| 72 | 1,82 | 3,06 | 12,55 | 30,1 | 575 | 68 | 153 | 38 |
| 70 | 1,42 | 2,20 | 9,43 | 29,9 | 618 | 72 | 168 | 34 |
| 73 | 2,03 | 3,40 | 13,2 | 28,4 | 525 | 30 | 171 | 36 |

**TABLEAU N° 9**

| CS % | CDO % | CDF % | Δ CD % | ΔT.base °C | ΔT.coeur °C | DP % |
|---|---|---|---|---|---|---|
| 15,1 | 7,5 | 10,5 | + 3,0 | 18 | 77 | 4,1 |
| 12,3 | 3,6 | 5,2 | + 1,6 | 18 | 71,5 | 2,6 |
| 12,7 | 3,8 | 5,0 | + 1,2 | 16 | 58,5 | 2,3 |
| 16,0 | 8,4 | 12,2 | + 3,8 | 18,5 | 80 | 4,6 |
| 10,6 | 2,0 | 2,7 | + 0,7 | 16 | 59 | 2,1 |

**ANALYSE DES RESULTATS**

Les deux mélanges (Elastomère-Silice et Elastomère-Silice-Silane) sont les deux mélanges témoins qui permettent de juger l'efficacité des différents produits testés.

Ce qui a été dit pour le SBR (exemple 1) au sujet du Silane est également valable avec le caoutchouc naturel.

Les deux produits 4 et 5 entraînent une très forte augmentation des modules à 300 % et surtout à 50 % d'allongement.

Toutes les caractéristiques dynamiques sont très améliorées.

Certaines améliorations obtenues sont supérieures: (Δ) CD, (Δ T.base), (DP), voire très supérieures (Δ T.coeur) à celles enregistrées avec le Silane.

**TABLEAU N° 10**
**RECAPITULATIF DES PRINCIPALES CARACTERISTIQUES**

| FORMULE / CARACTERISTIQUES | DURETE Sh A | REBOND % | MOD 50 % MPa | MOD 300% MPa | DECH.PANT. KN/m | ABR DIN $mm^3$ | ΔT C °C |
|---|---|---|---|---|---|---|---|
| - | 67 | 37 | 1,38 | 9,33 | 74 | 168 | 77 |
| $HS-(CH_2)_3Si(OCH_3)_3$ | 72 | 39 | 1,94 | 15,9 | 73 | 121 | 71,5 |
| $CH_2-CH-(CH_2)_8-CO-$ TEPA (3) (avec pont $S_2$) | 70 | 34 | 1,42 | 9,43 | 72 | 168 | 80 |
| $HS-(CH_2)_{10}-CO-$ TEPA (4) | 73 | 36 | 2,03 | 13,2 | 30 | 171 | 59 |
| $HS-(CH_2)_2-CO$ / $HS-(CH_2)_2-CO$ > TEPA (5) | 72 | 38 | 1,82 | 12,5 | 68 | 153 | 58,5 |

Cet exemple montre que dans le cas du caoutchouc naturel, il y a pour certains produits une amélioration qui peut être supérieure à celles observées avec des formules employant le silane seul, ce qui est surprenant et va dans le même sens que les résultats observés avec le caoutchouc synthétique.

**Revendications**

1) Compositions pour vulcanisats et le renforcement de caoutchoucs naturels et synthétiques caractérisées par le fait qu'elles sont à base de produits obtenus par réaction d'un porteur de groupement soufré avec des compositions à base de tétra-éthylène pentamine.

2) Compositions selon la revendication 1, caractérisées par le fait que la réaction entre ledit composé présentant au moins un groupement soufré avec lesdites compositions à base de tétra -éthylène pentamine est réalisée dans des conditions modérées de température, de manière à éviter la destruction prématurée des groupements soufrés et l'apparition des réactions parasites.

3) Compositions selon l'une des revendications 1 ou 2, caractérisées par le fait que le groupe soufré est apporté par un ester.

4) Compositions selon la revendication 3, caractérisées par le fait que la réaction est conduite à une température comprise entre 30 et 100° C.

5) Compositions selon l'une des revendications 1 ou 2, caractérisées par le fait que le groupement soufré est apporté par un acide.

6) Compositions selon la revendication 5, caractérisées par le fait que le groupement soufré est apporté par un acide en présence d'un agent de condensation.

7) Compositions selon la revendication 6, caractérisées par le fait que l'agent de condensation est constitué par le dicyclohexyl-carbodiimide.

8) Compositions selon l'une des revendications 1 ou 2, caractérisées par le fait que le groupe soufré est apporté par un composé du groupe des isothiocyanates d'alkyles et d'aryles.

9) Compositions selon l'une quelconque des revendications 1 à 3, présentant au moins un groupe mercaptan, caractérisées par le fait qu'elles sont obtenues en:
a) préparant un mercapto-acide de manière connue en soi
b) estérifiant le mercapto-acide au moyen d'un alcool
c) faisant réagir le mercapto-ester avec la TEPA

10) Compositions selon la revendication 9, caractérisées par le fait que la réaction du mercapto-ester avec la TEPA a lieu entre 30 et 100° C, en présence d'un hydrocarbure aromatique.

11. Compositions selon l'une des revendications 1, 2, 5, 6 et 7 présentant un groupe mercaptan, caractérisées par le fait qu'elles sont obtenues:
a) en préparant un mercapto-acide de manière connue en soi
b) en condensant le mercapto-acide avec la TEPA, en présence d'un agent de condensation en milieu solvant de la composition de produits soufrés obtenue, mais non solvant du produit de transformation de l'agent de condensation.

12) Compositions selon l'une des revendications 1 à 3 présentant au moins un groupe polysulfure, caractérisées par le fait qu'elles sont obtenues:
a) en faisant réagir du soufre avec un ester mono-insaturé pour obtenir un ester sulfurisé
b) en faisant réagir l'ester sulfurisé avec la TEPA en chauffant entre 30 et 100° C le rapport molaire ester sulfurisé/TEPA étant compris entre 1 et 3.

**Patentansprüche**

1. Zusammensetzungen für Vulkanisate und die Verstärkung natürlicher und synthetischer Kautschuke, dadurch gekennzeichnet, daß sie auf der Basis von Produkten sind, die durch Reaktion eines Trägers einer schwefelhaltigen Gruppe mit Zusammensetzungen auf Basis von Tetraethylenpentamin erhalten werden.

2. Zusammensetzungen nach Anspruch 1, dadurch gekennzeichnet, daß die Reaktion dieser Verbindung, die wenigstens eine schwefelhaltige Gruppe aufweist, mit diesen Zusammensetzungen auf Basis von Tetraethylenpentamin bei gemäßigten Temperaturbedingungen durchgeführt wird, um so die vorzeitige Zerstörung der schwefelhaltigen Gruppen und das Auftreten von Nebenreaktionen zu vermeiden.

3. Zusammensetzungen nach einem der Ansprüche 1 oder 2, dadurch gekennzeichnet, daß die schwefelhaltige Gruppe durch einen Ester eingeführt wird.

4. Zusammensetzungen nach Anspruch 3, dadurch gekennzeichnet, daß die Reaktion bei einer Temperatur zwischen 30 und 100° C durchgeführt wird.

5. Zusammensetzungen nach einem der Ansprüche 1 oder 2, dadurch gekennzeichnet, daß die schwefelhaltige Gruppe durch eine Säure eingeführt wird.

6. Zusammensetzungen nach Anspruch 5, dadurch gekennzeichnet, daß die schwefelhaltige Gruppe durch eine Säure in Gegenwart eines Kondensationsmittels eingeführt wird.

7. Zusammensetzungen nach Anspruch 6, dadurch gekennzeichnet, daß das Kondensationsmittel Dicyclohexylcarbodiimid ist.

8. Zusammensetzungen nach einem der Ansprüche 1 oder 2, dadurch gekennzeichnet, daß die schwefelhaltige Gruppe durch eine Verbindung aus der Gruppe der Alkyl- und Aryl-isothiocyanate eingeführt wird.

9. Zusammensetzungen nach einem der Ansprüche 1 bis 3, die wenigstens eine Merkaptogruppe aufweisen, dadurch gekennzeichnet, daß sie erhalten werden durch:

a) Herstellen einer Merkaptosäure in an sich bekannter Weise

b) Verestern der Merkaptosäure mittels eines Alkolhols

c) Reagierenlassen des Merkaptoesters mit dem TEPA.

10. Zusammensetzungen nach Anspruch 9, dadurch gekennzeichnet, daß die Reaktion des Merkaptoesters mit dem TEPA zwischen 30 und 100° C in Gegenwart eines aromatischen Kohlenwasserstoffs stattfindet.

11. Zusammensetzungen nach einem der Ansprüche 1, 2, 5, 6 und 7, die eine Merkaptogruppe aufweisen, dadurch gekennzeichnet, daß sie erhalten werden:

a) durch Herstellung einer Merkaptosäure in an sich bekannter Weise

b) Kondensation der Merkaptosäure mit dem TEPA in Gegenwart eines Kondensationsagens in einem Lösungsmittel für die Zusammensetzung der erhaltenen schwefelhaltigen Produkte, das jedoch das Umwandlungsprodukt des Kondensationsmittels nicht löst.

12. Zusammensetzungen nach einem der Ansprüche 1 bis 3, die wenigstens eine Polysulfidgruppe aufweisen, dadurch gekennzeichnet, daß sie erhalten werden:

a) durch Reagierenlassen von Schwefel mit einem einfach ungesättigten Ester, um so einem schwefelhaltigen Ester zu erhalten

b) durch Reagierenlassen des schwefelhaltigen Esters mit dem TEPA unter Erwärmen auf zwischen 30 und 100° C, wobei das molare Verhältnis von schwefelhaltigen Ester zu TEPA zwischen 1 und 3 liegt.

**Claims**

1. Compositions for vulcanisates and reinforcing natural and synthetic rubbers characterised in that they are based on products obtained by the reaction of a sulphur group carrier with compositions based on tetraethylene pentamine.

2. Compositions according to claim 1 characterised in that the reaction between said compound having at least one sulphur group with said compositions based on tetraethylene pentamine is carried out under moderate conditions in respect of temperature so as to avoid premature destruction of the sulphur groups and the occurence of parasite reactions.

3. Compositions according to one of claims 1 and 2 characterised in that the sulphur group is provided by an ester.

4. Compositions according to claim 3 characterised in that the reaction is carried out at a temperature of between 30 and 100°.

5. Compositions according to one if claims 1 and 2 characterised in that the sulphur group is provided by an acid.

6. Compositions according to claim 5 characterised in that the sulphur group is provided by an acid in the presence of a condensation agent.

7. Compositions according to claim 6 characterised in that the condensation agent is formed by dicyclohexyl carboiimide.

8. Compositions according to one of claims 1 and 2 characterised in that the sulphur group is supplied by a compound of the group consisting of isothiocyanates of alkyls and aryls.

9. Compositions according to any one of claims 1 to 3 having at least one mercaptan group characterised in that they are produced by:

a) preparing a mercapto-acid in per se known manner,

b) esterifying the mercapto-acid by means of an alcohol, and

c) reacting the mercapto-ester with TEPA.

10. Compositions according to claim 9 characterised in that the reaction of the mercapto-ester with TEPA takes place between 30 and 100°C in the presence of an aromatic hydrocarbon.

11. Compositions according to any one of claims 1, 2, 5, 6 and 7 having a mercaptan group characterised in that they are produced:

a) by preparing a mercapto-acid in per se known manner,

b) by condensing the mercapto-acid with TEPA in the presence of a condensation agent in a medium which is a solvent in respect of the composition of sulphur-bearing products obtained but not a solvent in respect of the product of transformation of the condensation agent.

12. Compositions according to one of claims 1 to 3 having at least one polysulphide group characterised in that they are produced:

a) by reacting sulphur with a mono-unsaturated ester to produce a sulphurised ester, and

b) by reacting the sulphurised ester with TEPA by heating at between 30 and 100°C, the sulphurised ester/TEPA molar ratio being between 1 and 3.